# EUROPEAN PATENT APPLICATION

(11) **EP 4 701 104 A1**
(43) Date of publication of application: **25.02.2026**
(21) Application number: 24814266.3
(22) Date of filing: 22.05.2024
(51) Int. Cl.: H04B 17/309, H04W 24/08

(54) **PARAMETER DETERMINATION METHOD, ELECTRONIC DEVICE, AND STORAGE MEDIUM**

(30) Priority: 02.06.2023 CN 202310650863
(71) Applicant: ZTE CORPORATION, Shenzhen, Guangdong 518057 (CN)
(72) Inventor: CHEN, Jie, Shenzhen, Guangdong 518057 (CN); LU, Youxiong, Shenzhen, Guangdong 518057 (CN); MIAO, Ting, Shenzhen, Guangdong 518057 (CN); HE, Haigang, Shenzhen, Guangdong 518057 (CN); BI, Feng, Shenzhen, Guangdong 518057 (CN); LOU, Junpeng, Shenzhen, Guangdong 518057 (CN)
(74) Representative: Ziebig Hengelhaupt Intellectual Property Attorneys Patentanwaltskanzlei PartGmbB
(86) International application number: PCT/CN2024/094680
(87) International publication number: WO 2024/245067

(57) **Abstract**

Embodiments of the present application provide a parameter determination method, an electronic device, and a storage medium. The method comprises: on the basis of a measured value measured in a resource pool, determining a transmission parameter of data to be transmitted that uses a first transmission beam at a first moment, wherein the measured value comprises at least one of the following: a channel busy ratio value measured on the basis of a first receiving beam on a resource pool within a channel busy ratio measurement ratio determined at the first moment, and a channel occupancy ratio value measured on the basis of the first transmission beam or a second transmission beam on a resource pool within a channel occupancy ratio measurement window determined at the first moment.

## Description

### CROSS-REFERENCE TO RELATED APPLICATIONS

The present invention claims priority to the Chinese patent application No. 202310650863.2 filed on June 2, 2023 to the China Patent Office, and entitled "PARAMETER DETERMINATION METHOD, ELECTRONIC DEVICE, AND STORAGE MEDIUM", and the entire content of this application is incorporated in the present invention by reference.

### TECHNICAL FIELD

The present application relates to the technical field of wireless communications, in particular to a parameter determination method, an electronic device, and a storage medium.

### BACKGROUND

Before transmitting data, sidelink (SL) user equipment (UE) needs to measure a sidelink channel occupancy ratio (CR) and a sidelink channel busy ratio (CBR) in a resource pool, and, based on the measured CBR, the measured CR, and a priority of the data to be transmitted, determine a transmission parameter for the data to be transmitted. Through measurement of the CBR and the CR, it avoids congestion in a certain spatial area, which influences SL communication performance. Traditional SL communication does not account for the concept of beams or considers traditional SL communication as being performed based on omnidirectional beams. However, when SL communication is achieved based on an FR2 frequency spectrum, the SL UE may have both transmitting beams and receiving beams. Consequently, it is possible that on a certain receiving beam, the CBR measured by the SL UE is below a threshold, leading to the conclusion that a channel is idle at that moment. However, if measured in the direction of another receiving beam, the CBR measured by the SL UE may exceed a threshold, leading to the conclusion that the channel is busy at that time. Therefore, when communicating over the SL based on beams, how to determine the CBR and the CR within a measurement window according to different beams so as to determine the transmission parameter is a problem that remains to be solved.

### SUMMARY

Embodiments of the present application aim to provide a parameter determination method, an electronic device, and a storage medium, so as to achieve parameter measurement and data transmission parameter determination under beam sidelink communication scenarios, which may improve communication quality.

An embodiment of the present application provides a parameter determination method. The method includes: determining a transmission parameter for data to be transmitted that uses a first transmitting beam at a first moment based on a measured value measured in a resource pool. The measured value includes at least one of the following: a measured channel busy ratio value based on a first receiving beam on a resource pool within a channel busy ratio measurement window determined at the first moment, or a measured channel occupancy ratio value based on the first transmitting beam or a second transmitting beam on a resource pool within a channel occupancy ratio measurement window determined at the first moment.

An embodiment of the present application further provides an electronic device. The electronic device includes: one or more processors; and a memory, configured to store one or more programs. The one or more programs, when executed by the one or more processors, cause the one or more processors to implement the method in any one of the embodiments of the present application.

An embodiment of the present application further provides a computer-readable storage medium. The computer-readable storage medium stores one or more programs, and the one or more programs, when executed by one or more processors, implement the method in any one of the embodiments of the present application.

### BRIEF DESCRIPTION OF DRAWING(S)

FIG. 1 is an example diagram of SL communication provided by an embodiment of the present application.
FIG. 2 is an example diagram of a resource pool configuration for SL communication provided by an embodiment of the present application.
FIG. 3 is an example diagram of measurement and determination of a measured value for SL communication provided by an embodiment of the present application.
FIG. 4 is a flowchart of a parameter determination method provided by an embodiment of the present application.
FIG. 5 is another flowchart of a parameter determination method provided by an embodiment of the present application.
FIG. 6 is another flowchart of a parameter determination method provided by an embodiment of the present application.
FIG. 7 is another flowchart of a parameter determination method provided by an embodiment of the present application.
FIG. 8 is another flowchart of a parameter determination method provided by an embodiment of the present application.
FIG. 9 is another flowchart of a parameter determination method provided by an embodiment of the present application.
FIG. 10 is another flowchart of a parameter determination method provided by an embodiment of the present application.
FIG. 11 is another flowchart of a parameter determination method provided by an embodiment of the present application.
FIG. 12 is another flowchart of a parameter determination method provided by an embodiment of the present application.
FIG. 13 is another flowchart of a parameter determination method provided by an embodiment of the present application.
FIG. 14 is another flowchart of a parameter determination method provided by an embodiment of the present application.
FIG. 15 is a schematic structural diagram of a resource pool provided by an embodiment of the present application.
FIG. 16 is an example diagram of a CBR measurement window provided by an embodiment of the present application.
FIG. 17 is an example diagram of a CR measurement window provided by an embodiment of the present application.
FIG. 18 is a schematic structural diagram of a parameter determination apparatus provided by an embodiment of the present application.
FIG. 19 is a schematic structural diagram of an electronic device provided by an embodiment of the present application.

### DETAILED DESCRIPTION

It is to be understood that the specific embodiments described here are only used for explaining the present application, instead of limiting the present application.

In subsequent descriptions, the use of suffixes such as "module", "component", or "unit" to represent elements is only for the purpose of facilitating the description of the present application and does not have a unique meaning in itself. Therefore, "module", "component", or "unit" may be used in a mixed manner.

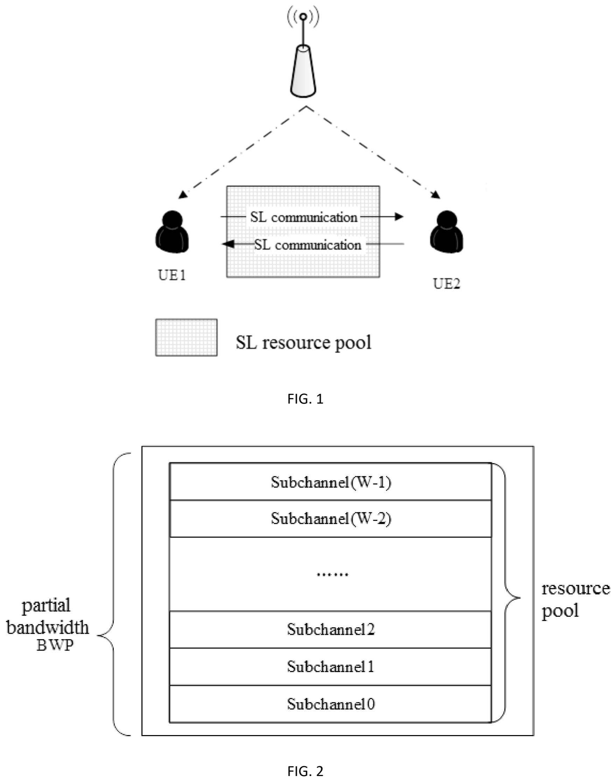

FIG. 1 is an example diagram of SL communication provided by an embodiment of the present application. Referring to FIG. 1, SL UE may perform communication through an SL resource pool, without a base station for forwarding data during SL communication. The minimum unit for data scheduling in the SL resource pool may be a subchannel. The SL resource pool is determined based on configured or pre-configured information. Referring to FIG. 2, the SL resource pool may be composed of W consecutive subchannels on a frequency domain. Generally, one piece of data occupies a plurality of consecutive subchannels, the subchannels are a plurality of consecutive resource blocks (RBs) determined based on the configured or pre-configured information, and configuration signaling may be as follows:

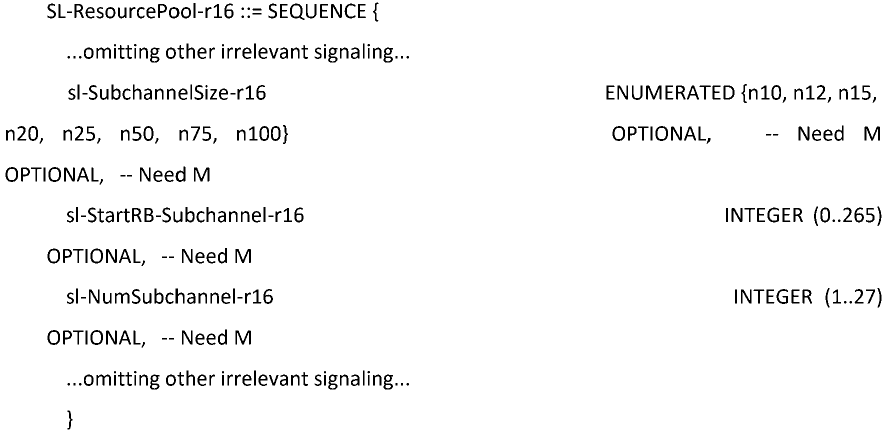

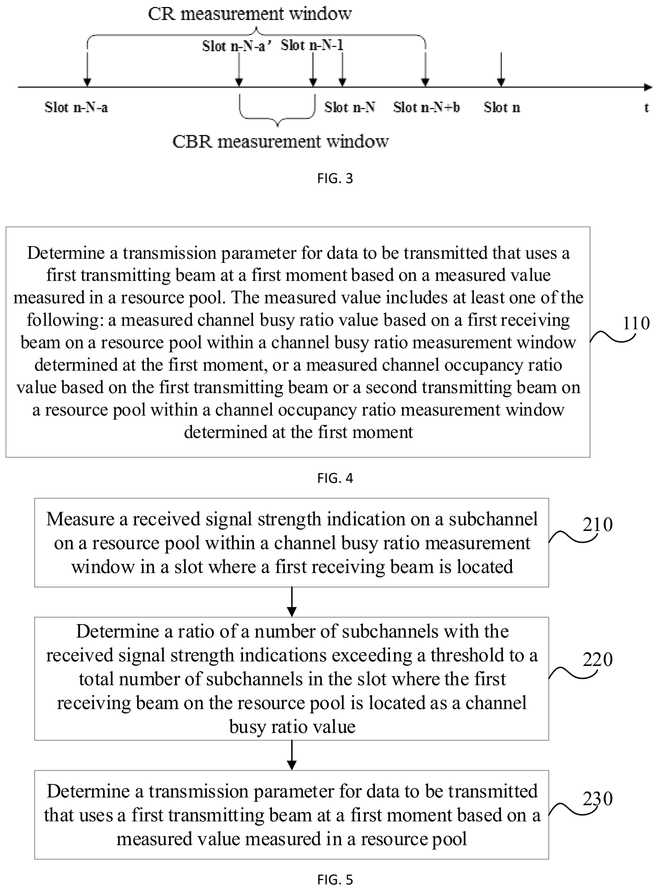

In current SL communication, communication of UE on an SL may be divided into model communication and mode2 communication. During model communication, physical layer resources of the SL UE are scheduled by a base station, and during mode2 communication, physical layer resources of the SL UE are independently selected by the UE. As shown in FIG. 3, in a case that a parameter SL-CR-Limit is configured for a higher layer of UE which independently selects resources under mode2, when the UE is ready to transmit data in a resource pool at a moment n, CBR measurement and CR measurement may be performed at a moment n-N, where a CBR measurement time window is [n-N-a', n-N-1], a CR measurement time window is [n-N-a, n-N+b], and N is congestion control and processing time. Afterwards, a transmission parameter for the data to be transmitted at the moment n is determined according to a CBR measured value and a CR measured value on the corresponding measurement windows on the resource pool. Further, data transmission of the SL UE generally has a corresponding priority, there are 8 priorities in total, typically, values of the priorities are from 1 to 8, and the smaller the value is, the higher the priority it represents. There is corresponding CR_limit under each priority, which indicates that channel resource occupancy by transmitting UE within a period of time under this priority is not allowed to exceed CR_limit.

FIG. 4 is a flowchart of a parameter determination method provided by an embodiment of the present application. The embodiment of the present application is applicable to a case that a terminal determines a transmission parameter under a sidelink communication scenario. The method may be performed by a parameter determination apparatus, and the apparatus may be implemented through software and/or hardware. As shown in FIG. 4, the method provided by the embodiment of the present application specifically includes the following step.

Step 110: a transmission parameter for data to be transmitted that uses a first transmitting beam at a first moment is determined based on a measured value measured in a resource pool. The measured value includes at least one of the following: a measured channel busy ratio value based on a first receiving beam on a resource pool within a channel busy ratio measurement window determined at the first moment, or a measured channel occupancy ratio value based on the first transmitting beam or a second transmitting beam on a resource pool within a channel occupancy ratio measurement window determined at the first moment.

The measured value may be a parameter for determining a channel state of the first transmitting beam which is used to transmit the data to be transmitted. The measured value may include a CBR value, a CR value, etc. The first moment may be a moment for transmitting the data to be transmitted. The first moment may be a slot where transmitting resources for the data to be transmitted are located. The first transmitting beam may be a beam bearing the data to be transmitted, while the first receiving beam may be a receiving beam determined according to a particular rule. The second transmitting beam may be a beam different from the first transmitting beam.

In the embodiment of the present application, channel busy ratio measurement is performed based on the first receiving beam on the resource pool through the channel busy ratio measurement window determined at the first moment, and the transmission parameter for the data to be transmitted that uses the first transmitting beam at the first moment may be determined through the measured value which is obtained by measurement. Alternatively, channel occupancy ratio measurement may be performed based on the first transmitting beam or the second transmitting beam on the resource pool through the channel occupancy ratio measurement window determined at the first moment, and the transmission parameter for the data to be transmitted that uses the first transmitting beam at the first moment may be determined through the measured value which is obtained by measurement. It may be appreciated that, the transmission parameter for the data to be transmitted that uses the first transmitting beam at the first moment may be determined by measuring the channel occupancy ratio value and the channel busy ratio value in the way above.

Further, based on the above embodiment of the present application, the transmission parameter may include at least one of the following: an encoding policy, a number of retransmissions, a number of subchannels, transmitting power, or a carrier wave.

In the embodiment of the present application, the transmission parameter for the data to be transmitted may be determined through the measured channel occupancy ratio and/or channel busy ratio, and the encoding policy, the number of retransmissions, the number of the subchannels, the transmitting power, the carrier wave, etc. of the data to be transmitted may be determined specifically.

Further, based on the above embodiment of the present application, the first receiving beam includes at least one of the following:
a receiving beam having a beam correspondence relationship with the first transmitting beam on the resource pool within the channel busy ratio measurement window, wherein the correspondence relationship is determined by a device-indicated beam correspondence capability;
a receiving beam spatially covering the first transmitting beam on the resource pool within the channel busy ratio measurement window;
a receiving beam spatially covered by the first transmitting beam on the resource pool within the channel busy ratio measurement window;
a receiving beam spatially overlapping with the first transmitting beam on the resource pool within the channel busy ratio measurement window;
all receiving beams on the resource pool within the channel busy ratio measurement window;
all receiving beams greater than the first transmitting beam in spatial beam width on the resource pool within the channel busy ratio measurement window;
all receiving beams with spatial beam widths greater than a first threshold on the resource pool within the channel busy ratio measurement window; or
a receiving beam with a received signal strength indication measured on a subchannel greater than a second threshold on the resource pool within the channel busy ratio measurement window.

In the embodiment of the present application, the first receiving beam may be one or more of the receiving beams determined in the way above.

Further, based on the above embodiment of the present application, the second transmitting beam includes at least one of the following:
all transmitting beams spatially covering the first transmitting beam on the resource pool within the channel occupancy ratio measurement window;
all transmitting beams spatially covered by the first transmitting beam on the resource pool within the channel occupancy ratio measurement window;
a transmitting beam spatially overlapping with the first transmitting beam on the resource pool within the channel occupancy ratio measurement window;
all transmitting beams on the resource pool within the channel occupancy ratio measurement window;
all transmitting beams greater than the first transmitting beam in spatial beam width on the resource pool within the channel occupancy ratio measurement window; or
all transmitting beams with spatial beam widths greater than a third threshold on the resource pool within the channel occupancy ratio measurement window.

In the embodiment of the present application, the second transmitting beam may be one or more of the transmitting beams determined in the way above. It may be appreciated that, the second threshold and/or the third threshold may be determined in a configured or pre-configured manner.

FIG. 5 is another flowchart of a parameter determination method provided by an embodiment of the present application. The embodiment of the present application is concretization based on the above embodiment of the present application. The measured value includes the channel busy ratio value. Referring to FIG. 5, the method provided by the embodiment of the present application specifically includes the following steps.

Step 210: a received signal strength indication is measured on a subchannel in a slot where the first receiving beam on the resource pool within the channel busy ratio measurement window is located.

In the embodiment of the present application, the received signal strength indication measured on the subchannel in the slot where the first receiving beam within the channel busy ratio measurement window is located may be counted on the resource pool, and it may be appreciated that, the channel busy ratio measurement window may be a channel busy ratio measurement window determined at the first moment for transmitting the data to be transmitted.

Step 220: a ratio of a number of subchannels with the received signal strength indications exceeding a threshold to a total number of subchannels in the slot where the first receiving beam on the resource pool is located is determined as the channel busy ratio value.

Specifically, the received signal strength indication (RSSI) measured on the subchannel in the slot where the first receiving beam is located may be compared with the threshold, the number that exceeds the threshold is determined, the ratio of the number to the total number of the subchannels in the slot where the first receiving beam on the resource pool is located may be determined, and the ratio may be used as the channel busy ratio value, i.e., the measured value for determining the transmission parameter for the data to be transmitted.

Step 230: the transmission parameter for the data to be transmitted that uses the first transmitting beam at the first moment is determined based on the measured value measured in the resource pool.

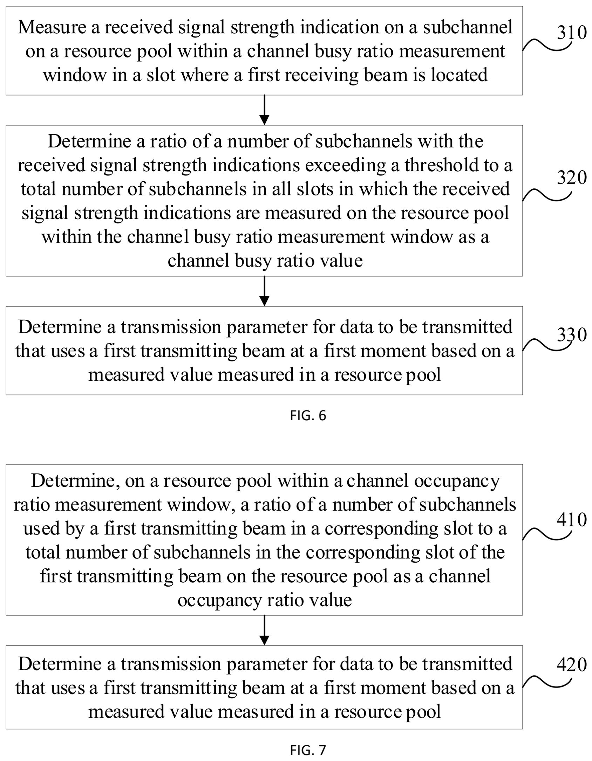

FIG. 6 is another flowchart of a parameter determination method provided by an embodiment of the present application. The embodiment of the present application is concretization based on the above embodiment of the present application. The measured value includes the channel busy ratio value. Referring to FIG. 6, the method provided by the embodiment of the present application specifically includes the following steps.

Step 310: a received signal strength indication is measured on a subchannel in a slot where the first receiving beam on the resource pool within the channel busy ratio measurement window is located.

In the embodiment of the present application, the received signal strength indication measured on the subchannel in the slot where the first receiving beam within the channel busy ratio measurement window is located may be counted on the resource pool, and it may be appreciated that, the channel busy ratio measurement window may be a channel busy ratio measurement window determined at the first moment for transmitting the data to be transmitted.

Step 320: a ratio of a number of subchannels with the received signal strength indications exceeding a threshold to a total number of subchannels in all slots in which the received signal strength indications are measured on the resource pool within the channel busy ratio measurement window is determined as the channel busy ratio value.

The received signal strength indication measured on the subchannel in the slot where the first receiving beam is located may be compared with the threshold, the number that exceeds the threshold is determined, the ratio of the number to the total number of the subchannels in all the slots in which the received signal strength indications are measured on the resource pool within the channel busy ratio measurement window may be determined, and the ratio may be used as the channel busy ratio value, i.e., the measured value for determining the transmission parameter for the data to be transmitted.

Step 330: the transmission parameter for the data to be transmitted that uses the first transmitting beam at the first moment is determined based on the measured value measured in the resource pool.

FIG. 7 is another flowchart of a parameter determination method provided by an embodiment of the present application. The embodiment of the present application is concretization based on the above embodiment of the present application. The measured value includes the channel occupancy ratio value. Referring to FIG. 7, the method provided by the embodiment of the present application specifically includes the following steps.

Step 410: on the resource pool within the channel occupancy ratio measurement window, a ratio of a number of subchannels used by the first transmitting beam in a corresponding slot to a total number of subchannels in the corresponding slot of the first transmitting beam on the resource pool is determined as the channel occupancy ratio value.

In the embodiment of the present application, the slot to which the first transmitting beam belongs within the channel occupancy ratio measurement window may be determined on the resource pool, the number of the subchannels used in the above slot may be determined, and the ratio of the number of the subchannels to the total number of the subchannels in the corresponding slot of the first transmitting beam on the resource pool may be used as the channel occupancy ratio value in the measured value.

Step 420: the transmission parameter for the data to be transmitted that uses the first transmitting beam at the first moment is determined based on the measured value measured in the resource pool.

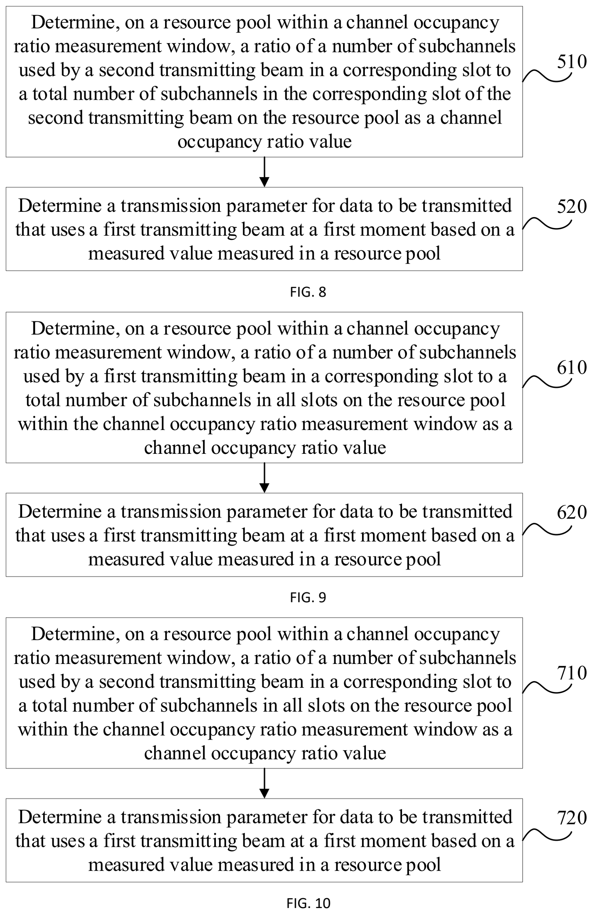

FIG. 8 is another flowchart of a parameter determination method provided by an embodiment of the present application. The embodiment of the present application is concretization based on the above embodiment of the present application. The measured value includes the channel occupancy ratio value. Referring to FIG. 8, the method provided by the embodiment of the present application specifically includes the following steps.

Step 510: on the resource pool within the channel occupancy ratio measurement window, a ratio of a number of subchannels used by the second transmitting beam in a corresponding slot to a total number of subchannels in the corresponding slot of the second transmitting beam on the resource pool is determined as the channel occupancy ratio value.

In the embodiment of the present application, the slot to which the second transmitting beam belongs within the channel occupancy ratio measurement window may be determined on the resource pool, the number of the subchannels used in the above slot may be determined, and the ratio of the number of the subchannels to the total number of the subchannels in the corresponding slot of the second transmitting beam on the resource pool may be used as the channel occupancy ratio value in the measured value.

Step 520: the transmission parameter for the data to be transmitted that uses the first transmitting beam at the first moment is determined based on the measured value measured in the resource pool.

FIG. 9 is another flowchart of a parameter determination method provided by an embodiment of the present application. The embodiment of the present application is concretization based on the above embodiment of the present application. The measured value includes the channel occupancy ratio value. Referring to FIG. 9, the method provided by the embodiment of the present application specifically includes the following steps.

Step 610: on the resource pool within the channel occupancy ratio measurement window, a ratio of a number of subchannels used by the first transmitting beam in a corresponding slot to a total number of subchannels in all slots on the resource pool within the channel occupancy ratio measurement window is determined as the channel occupancy ratio value.

In the embodiment of the present application, the slot to which the first transmitting beam belongs within the channel occupancy ratio measurement window on the resource pool may be determined, the number of the subchannels used by the first transmitting beam in the slot may be determined, and the ratio of the number of the subchannels to the total number of the subchannels in all the slots on the resource pool within the channel occupancy ratio measurement window may be used as the channel occupancy ratio value in the measured value.

Step 620: the transmission parameter for the data to be transmitted that uses the first transmitting beam at the first moment is determined based on the measured value measured in the resource pool.

FIG. 10 is another flowchart of a parameter determination method provided by an embodiment of the present application. The embodiment of the present application is concretization based on the above embodiment of the present application. The measured value includes the channel occupancy ratio value. Referring to FIG. 10, the method provided by the embodiment of the present application specifically includes the following steps.

Step 710: on the resource pool within the channel occupancy ratio measurement window, a ratio of a number of subchannels used by the second transmitting beam in a corresponding slot to a total number of subchannels in all slots on the resource pool within the channel occupancy ratio measurement window is determined as the channel occupancy ratio value.

In the embodiment of the present application, the slot to which the second transmitting beam belongs in the channel occupancy ratio measurement window on the resource pool may be determined, the number of the subchannels used by the second transmitting beam in the slot may be determined, and the ratio of the number of the subchannels to the total number of the subchannels in all the slots on the resource pool within the channel occupancy ratio measurement window may be used as the channel occupancy ratio value in the measured value.

Step 720: the transmission parameter for the data to be transmitted that uses the first transmitting beam at the first moment is determined based on the measured value measured in the resource pool.

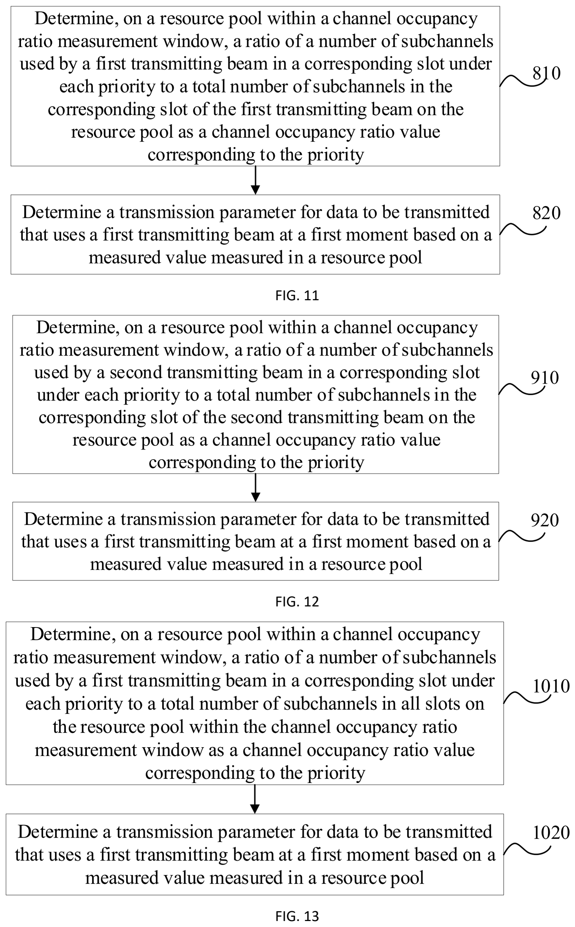

FIG. 11 is another flowchart of a parameter determination method provided by an embodiment of the present application. The embodiment of the present application is concretization based on the above embodiment of the present application. The measured value includes the channel occupancy ratio value. Referring to FIG. 11, the method provided by the embodiment of the present application specifically includes the following steps.

Step 810: on the resource pool within the channel occupancy ratio measurement window, a ratio of a number of subchannels used by the first transmitting beam in a corresponding slot under each priority to a total number of subchannels in the corresponding slot of the first transmitting beam on the resource pool is determined as the channel occupancy ratio value corresponding to the priority.

In the embodiment of the present application, on the slot to which the first transmitting beam belongs under different priorities within the channel occupancy ratio measurement window on the resource pool, the number of the subchannels used by the first transmitting beam in the above slot may be determined, and the ratio of the number of the subchannels used by the first transmitting beam determined under each of the different priorities to the total number of the subchannels in the corresponding slot of the first transmitting beam on the resource pool may be used as the channel occupancy ratio value corresponding to the priority.

Step 820: the transmission parameter for the data to be transmitted that uses the first transmitting beam at the first moment is determined based on the measured value measured in the resource pool.

FIG. 12 is another flowchart of a parameter determination method provided by an embodiment of the present application. The embodiment of the present application is concretization based on the above embodiment of the present application. The measured value includes the channel occupancy ratio value. Referring to FIG. 12, the method provided by the embodiment of the present application specifically includes the following steps.

Step 910: on the resource pool within the channel occupancy ratio measurement window, a ratio of a number of subchannels used by the second transmitting beam in a corresponding slot under each priority to a total number of subchannels in the corresponding slot of the second transmitting beam on the resource pool is determined as the channel occupancy ratio value corresponding to the priority.

In the embodiment of the present application, on the slot to which the second transmitting beam belongs under different priorities within the channel occupancy ratio measurement window on the resource pool, the number of the subchannels used by the second transmitting beam in the above slot may be determined, and the ratio of the number of the subchannels used by the second transmitting beam determined under each of the different priorities to the total number of the subchannels in the corresponding slot of the second transmitting beam on the resource pool may be used as the channel occupancy ratio value corresponding to the priority.

Step 920: the transmission parameter for the data to be transmitted that uses the first transmitting beam at the first moment is determined based on the measured value measured in the resource pool.

FIG. 13 is another flowchart of a parameter determination method provided by an embodiment of the present application. The embodiment of the present application is concretization based on the above embodiment of the present application. The measured value includes the channel occupancy ratio value. Referring to FIG. 13, the method provided by the embodiment of the present application specifically includes the following steps.

Step 1010: on the resource pool within the channel occupancy ratio measurement window, a ratio of a number of subchannels used by the first transmitting beam in a corresponding slot under each priority to a total number of subchannels in all slots on the resource pool within the channel occupancy ratio measurement window is determined as the channel occupancy ratio value corresponding to the priority.

In the embodiment of the present application, on the slot to which the first transmitting beam belongs under different priorities in the channel occupancy ratio measurement window on the resource pool, the number of the subchannels used by the first transmitting beam in the above slot may be determined, and the ratio of the number of the subchannels used by the first transmitting beam determined under each of the different priorities to the total number of the subchannels in all the slots on the resource pool within the channel occupancy ratio measurement window may be used as the channel occupancy ratio value corresponding to the priority.

Step 1020: the transmission parameter for the data to be transmitted that uses the first transmitting beam at the first moment is determined based on the measured value measured in the resource pool.

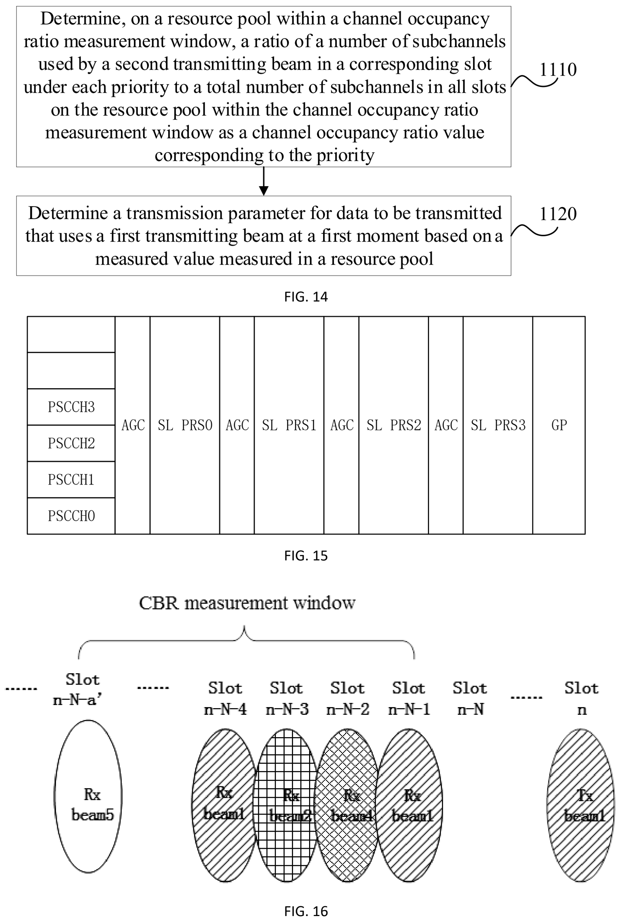

FIG. 14 is another flowchart of a parameter determination method provided by an embodiment of the present application. The embodiment of the present application is concretization based on the above embodiment of the present application. The measured value includes the channel occupancy ratio value. Referring to FIG. 14, the method provided by the embodiment of the present application specifically includes the following steps.

Step 1110: on the resource pool within the channel occupancy ratio measurement window, a ratio of a number of subchannels used by the second transmitting beam in a corresponding slot under each priority to a total number of subchannels in all slots on the resource pool within the channel occupancy ratio measurement window is determined as the channel occupancy ratio value corresponding to the priority.

In the embodiment of the present application, on the slot to which the second transmitting beam belongs under different priorities in the channel occupancy ratio measurement window on the resource pool, the number of the subchannels used by the second transmitting beam in the above slot may be determined, and the ratio of the number of the subchannels used by the second transmitting beam determined under each of the different priorities to the total number of the subchannels in all the slots on the resource pool within the channel occupancy ratio measurement window may be used as the channel occupancy ratio value corresponding to the priority.

Step 1120: the transmission parameter for the data to be transmitted that uses the first transmitting beam at the first moment is determined based on the measured value measured in the resource pool.

Further, based on the above embodiment of the present application, determining the transmission parameter for the data to be transmitted that uses the first transmitting beam at the first moment based on the measured value measured in the resource pool includes: determining, based on the measured value measured on at least one resource pool associated with each carrier wave in all candidate carrier waves, at least one carrier wave for the data to be transmitted that uses the first transmitting beam at the first moment.

In the embodiment of the present application, the measured value measured on at least one resource pool associated with each of the candidate carrier waves may be determined for each candidate carrier wave that transmits the first transmitting beam, the measured value may be the channel busy ratio value and/or the channel occupancy ratio value determined by any method above, and one or more carrier waves for the data to be transmitted that uses the first transmitting beam at the first moment may be determined through the determined measured value.

Further, based on the above embodiment of the present application, the method further includes:
using a default or configured or pre-configured measured channel occupancy ratio in a case where the measured channel occupancy ratio value on the resource pool within the channel busy ratio measurement window is lower than a fourth threshold.

In the embodiment of the present application, the measured channel occupancy ratio value determined by any method above is compared with the fourth threshold, and the default or configured or pre-configured measured channel occupancy ratio value may be used in a case where the measured channel occupancy ratio is less than the fourth threshold, thereby further determining the transmission parameter for the data to be transmitted that uses the first transmitting beam at the first moment.

Based on the above embodiment of the present application, a subchannel includes at least one of the following: a subchannel in a resource pool, a data channel in the resource pool, a control channel in the resource pool, and a reference signal resource in the resource pool.

In some embodiments of the present application, the subchannel in the resource pool may include one or more of the subchannel in the resource pool, the data channel in the resource pool, the control channel in the resource pool, and the reference signal resource in the resource pool. Referring to FIG. 15, the resource pool may be composed of control channels and reference signal (RS) resources. An RS transmission parameter may be controlled by measuring a CRB, which may be measured based on a physical sidelink control channel (PSCCH) or measured based on a positioning reference signal (PRS).

In an exemplary implementation, data to be transmitted in slot n uses a first transmitting beam, within a CBR measurement window [n-N-a', n-N-1], the CBR may be counted based on a first receiving beam, the first receiving beam may be a receiving beam corresponding to the first transmitting beam, and SL UE may indicate the presence of a capability to determine beam correspondence. Specifically, an RSSI measured using a subchannel in a slot of the first receiving beam within the CBR measurement window determined based on slot n may be determined on the resource pool, a proportion of subchannels with determined RSSIs exceeding a configured or pre-configured RSSI threshold may be calculated as a measured value of the CBR, and a default CBR value is used instead of the measured value in a case where the measured value of the CBR is lower than the configured or pre-configured threshold.

Referring to FIG. 16, the data to be transmitted in slot n uses a transmitting beam 1, and within the CBR measurement window [n-N-a', n-N-1], a receiving beam 1 is used in slot n-N-4, and the receiving beam 1 is used in slot n-N-1, wherein the transmitting beam 1 and the receiving beam 1 meet beam correspondence. Therefore, at a moment of measuring the CBR, RSSIs are only measured on subchannels in slot n-N-1 and slot n-N-4 within the CBR window, and a ratio of the number of subchannels with the measured RSSIs exceeding the threshold in the two slots to the total number of subchannels in the two slots is calculated as the measured CBR value, which is used to calculate a transmission parameter for the data to be transmitted in slot n.

Referring to FIG. 16, the data to be transmitted in slot n uses the transmitting beam 1, and within the CBR measurement window [n-N-a', n-N-1], the receiving beam 1 is used in slot n-N-4, and the receiving beam 1 is used in slot n-N-1, wherein the transmitting beam 1 and the receiving beam 1 meet beam correspondence. Therefore, at the moment of measuring the CBR, RSSIs are only measured on the subchannels in slot n-N-1 and slot n-N-4 within the CBR window, and a ratio of the number of subchannels with the measured RSSIs exceeding the threshold in the two slots to the total number of subchannels in all measured slots within the CBR measurement window is calculated as the measured CBR value, which is used to calculate the transmission parameter for the data to be transmitted in slot n.

In an exemplary implementation, the data to be transmitted in slot n uses the first transmitting beam, and within the CBR measurement window [n-N-a', n-N-1], the CBR is counted based on the first receiving beam. UE in the CBR measurement window may use various beams to receive data, and the first receiving beam refers to all receiving beams that may spatially cover the first transmitting beam or that spatially overlap with the first transmitting beam in the measurement window. Counting the CBR based on the first receiving beam refers to a proportion of subchannels on which the measured RSSIs exceed the configured or pre-configured RSSI threshold in the slot where the first receiving beam is used within the CBR measurement window. The default CBR value is used instead of the measured value in a case where the measured value of the CBR is lower than the configured or pre-configured threshold.

Referring to FIG. 16, the data to be transmitted in slot n uses the transmitting beam 1, and within the CBR measurement window [n-N-a', n-N-1], the receiving beam 1 is used in slot n-N-4, a receiving beam 2 is used in slot n-N-3, and the receiving beam 1 is used in slot n-N-1, wherein the receiving beam 1 and the receiving beam 2 may spatially cover the transmitting beam 1, and receiving beams in other slots cannot spatially cover the transmitting beam 1. Therefore, at the moment of measuring the CBR, RSSIs are only measured on the subchannels in the three slots n-N-1, n-N-3 and n-N-4 within the CBR window, and a ratio of the number of subchannels with the measured RSSIs exceeding the threshold to the total number of subchannels in the three slots is calculated as the measured CBR value, which is used to calculate the transmission parameter for the data to be transmitted in slot n.

Referring to FIG. 16, the data to be transmitted in slot n uses the transmitting beam 1, and within the CBR measurement window [n-N-a', n-N-1], the receiving beam 1 is used in slot n-N-4, the receiving beam 2 is used in slot n-N-3, and the receiving beam 1 is used in slot n-N-1, wherein the receiving beam 1 and the receiving beam 2 may spatially cover the transmitting beam 1, and receiving beams in other slots cannot spatially cover the transmitting beam 1. Therefore, at the moment of measuring the CBR, RSSIs are only measured on the subchannels in the three slots n-N-1, n-N-3 and n-N-4 within the CBR window, and a ratio of the number of subchannels with the measured RSSIs exceeding the threshold to the total number of subchannels in all measured slots within the CBR measurement window is calculated as the measured CBR value, which is used to calculate the transmission parameter for the data to be transmitted in slot n.

In an exemplary implementation, the data to be transmitted in slot n uses the first transmitting beam, and within the CBR measurement window [n-N-a', n-N-1], the CBR is counted based on the first receiving beam. The UE in the CBR measurement window may use various beams to receive data, and the first receiving beam refers to all receiving beams that may be spatially covered by the first transmitting beam or that spatially overlap with the first transmitting beam in the measurement window. Counting the CBR based on the first receiving beam refers to a proportion of subchannels on which the measured RSSIs exceed the configured or pre-configured RSSI threshold in the slot where the first receiving beam is used within the CBR measurement window. The default CBR value is used instead of the measured value in a case where the measured value of the CBR is lower than the configured or pre-configured threshold.

Referring to FIG. 16, the data to be transmitted in slot n uses the transmitting beam 1, and within the CBR measurement window [n-N-a', n-N-1], the receiving beam 1 is used in slot n-N-4, the receiving beam 2 is used in slot n-N-3, and the receiving beam 1 is used in slot n-N-1, wherein the receiving beam 1 and the receiving beam 2 may be spatially covered by the transmitting beam 1, and receiving beams in other slots cannot be spatially covered by the transmitting beam 1. Therefore, at the moment of measuring the CBR, RSSIs are only measured on the subchannels in the three slots n-N-1, n-N-3 and n-N-4 within the CBR window, and a ratio of the number of subchannels with the measured RSSIs exceeding the threshold to the total number of subchannels in the three slots is calculated as the measured CBR value, which is used to calculate the transmission parameter for the data to be transmitted in slot n.

Referring to FIG. 16, the data to be transmitted in slot n uses the transmitting beam 1, and within the CBR measurement window [n-N-a', n-N-1], the receiving beam 1 is used in slot n-N-4, the receiving beam 2 is used in slot n-N-3, and the receiving beam 1 is used in slot n-N-1, wherein the receiving beam 1 and the receiving beam 2 may be spatially covered by the transmitting beam 1, and receiving beams in other slots cannot be spatially covered by the transmitting beam 1. Therefore, at the moment of measuring the CBR, RSSIs are only measured on the subchannels in the three slots n-N-1, n-N-3 and n-N-4 within the CBR window, and a ratio of the number of subchannels with the measured RSSIs exceeding the threshold to the total number of subchannels in all measured slots within the CBR measurement window is calculated as the measured CBR value, which is used to calculate the transmission parameter for the data to be transmitted in slot n.

In an exemplary implementation, the data to be transmitted in slot n uses the first transmitting beam, and within the CBR measurement window [n-N-a', n-N-1], the CBR is counted based on the first receiving beam. The UE in the CBR measurement window may use various beams to receive data, and the first receiving beam refers to any receiving beam within the measurement window. Counting the CBR based on the first receiving beam refers to a proportion of subchannels on which the measured RSSIs exceed the configured or pre-configured RSSI threshold in the slot where the first receiving beam is used within the CBR measurement window. The default CBR value is used instead of the measured value in a case where the measured value of the CBR is lower than the configured or pre-configured threshold.

Referring to FIG. 16, the data to be transmitted in slot n uses the transmitting beam 1, and in the CBR measurement window [n-N-a', n-N-1]. Therefore, at the moment of measuring the CBR, RSSIs are measured on subchannels in all measurable slots within the CBR window, and a ratio of the number of subchannels with the measured RSSIs exceeding the threshold in these slots to the total number of subchannels in all the measurable slots is calculated as the measured CBR value, which is used to calculate the transmission parameter for the data to be transmitted in slot n.

In an exemplary implementation, the data to be transmitted in slot n uses the first transmitting beam, and within the CBR measurement window [n-N-a', n-N-1], the CBR is counted based on the first receiving beam. The UE in the CBR measurement window may use various beams to receive data, the first receiving beam refers to all receiving beams greater than the first transmitting beam in spatial beam width within the measurement window, or the first receiving beam refers to all receiving beams with spatial beam widths greater than a first threshold within the measurement window. Counting the CBR based on the first receiving beam refers to a proportion of subchannels on which the measured RSSIs exceed the configured or pre-configured RSSI threshold in the slot where the first receiving beam is used within the CBR measurement window. The default CBR value is used instead of the measured value in a case where the measured value of the CBR is lower than the configured or pre-configured threshold.

In an exemplary implementation, the data to be transmitted in slot n uses the first transmitting beam, and within a CR measurement window [n-N-a', n-N-1], a CR may be counted based on the first transmitting beam. Specifically, a ratio of the number of subchannels that have used the first transmitting beam and the number of subchannels that are about to use the first transmitting beam within the CR measurement window determined based on slot n to the total number of subchannels in the CR measurement window may be determined on the resource pool as a measured value of the CR.

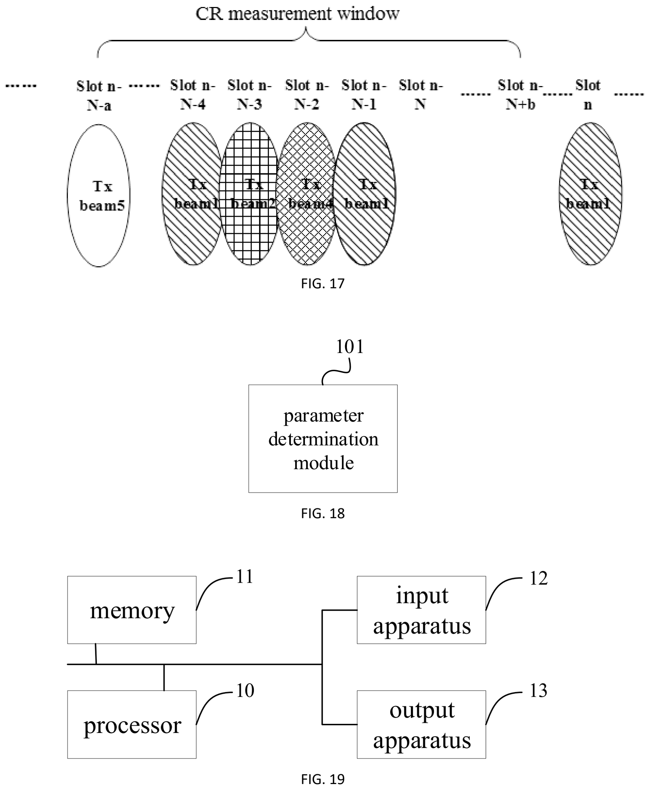

Referring to FIG. 17, the data to be transmitted in slot n uses a transmitting beam 1, and within a CR measurement window [n-N-a, n-N+b], the transmitting beam 1 is used in slot n-N-4, and the transmitting beam 1 is used in slot n-N-1. Therefore, at a moment of measuring the CR, a ratio of the number of used subchannels only in slot n-N-1 and slot n-N-4 within the CR window to the total number of subchannels in the two slots is calculated as a measured CR value, which is used to calculate a transmission parameter for the data to be transmitted in slot n.

Referring to FIG. 17, the data to be transmitted in slot n uses the transmitting beam 1, and within a CR measurement window [n-N-a, n+1], the transmitting beam 1 is used in slot n-N-4, and the transmitting beam 1 is used in slot n-N-1. Therefore, at the moment of measuring the CR, a ratio of the number of used subchannels only in slot n-N-1 and slot n-N-4 within the CR window to the total number of subchannels in all slots within the CR measurement window is calculated as the measured CR value, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, and the transmitting beam 1 is used in slot n-N-1. Therefore, at the moment of measuring the CR, within the CR window, a ratio of the number of used subchannels only in slot n-N-1 and slot n-N-4 to the total number of subchannels in the two slots is calculated according to each priority as a measured CR value under each priority, which is used to calculate the transmission parameter for the data to be transmitted in slot n.

Referring to FIG. 17, the data to be transmitted in slot n uses the transmitting beam 1, and within the CR measurement window [n-N-a, n+1], the transmitting beam 1 is used in slot n-N-4, and the transmitting beam 1 is used in slot n-N-1. Therefore, at the moment of measuring the CR, within the CR window, a ratio of the number of used subchannels only in slot n-N-1 and slot n-N-4 to the total number of subchannels in all slots within the CR measurement window is calculated according to each priority as a measured CR value under each priority, which is used to calculate the transmission parameter for the data to be transmitted in slot n.

In an exemplary implementation, the data to be transmitted in slot n uses the first transmitting beam, and within a CR measurement window [n-N-a, n-N+b], a CR is counted based on a second transmitting beam. UE in the CR measurement window may use various beams to transmit data, and the second transmitting beam refers to all transmitting beams that may spatially cover the first transmitting beam or that spatially overlap with the first transmitting beam within the CR measurement window. Counting the CR based on the second transmitting beam refers to, within the CR measurement window, a ratio of the number of subchannels that have used the second transmitting beam and the number of subchannels that are about to use the second transmitting beam to the total number of subchannels in the measurement window.

Referring to FIG. 17, the data to be transmitted in slot n uses the transmitting beam 1, and within the CR measurement window [n-N-a, n-N+b], the transmitting beam 1 is used in slot n-N-4, a transmitting beam 2 is used in slot n-N-3, and the transmitting beam 1 is used in slot n-N-1. The receiving beam 1 and the receiving beam 2 may spatially cover the transmitting beam 1, and receiving beams in other slots cannot spatially cover the transmitting beam 1. Therefore, at the moment of measuring the CR, a ratio of the number of used subchannels only in three slots n-N-1, n-N-3 and n-N-4 within the CR window to the total number of subchannels in the three slots is calculated as the measured CR value, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The receiving beam 1 and the receiving beam 2 may spatially cover the transmitting beam 1, and receiving beams in other slots cannot spatially cover the transmitting beam 1. Therefore, at the moment of measuring the CR, a ratio of the number of used subchannels only in three slots n-N-1, n-N-3 and n-N-4 within the CR window to the total number of subchannels in all slots within the CR measurement window is calculated as the measured CR value, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The receiving beam 1 and the receiving beam 2 may spatially cover the transmitting beam 1, and receiving beams in other slots cannot spatially cover the transmitting beam 1. Therefore, at the moment of measuring the CR, within the CR window, a ratio of the number of used subchannels only in three slots n-N-1, n-N-3 and n-N-4 to the total number of subchannels in the three slots is calculated according to each priority as a measured CR value under each priority, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The receiving beam 1 and the receiving beam 2 may spatially cover the transmitting beam 1, and receiving beams in other slots cannot spatially cover the transmitting beam 1. Therefore, at the moment of measuring the CR, within the CR window, a ratio of the number of used subchannels only in three slots n-N-1, n-N-3 and n-N-4 to the total number of subchannels in all slots within the CR measurement window is calculated according to each priority as a measured CR value under each priority, which is used to calculate the transmission parameter for the data to be transmitted in slot n.

In an exemplary implementation, the data to be transmitted in slot n uses the first transmitting beam, and within the CR measurement window [n-N-a, n-N+b], the CR is counted based on the second transmitting beam. The UE in the CR measurement window may use various beams to transmit data, and the second transmitting beam refers to all transmitting beams that may be spatially covered by the first transmitting beam or that spatially overlap with the first transmitting beam within the CR measurement window. Counting the CR based on the second transmitting beam refers to, within the CR measurement window, a ratio of the number of subchannels that have used the second transmitting beam and the number of subchannels that are about to use the second transmitting beam to the total number of subchannels in the measurement window.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The transmitting beam 1 and the transmitting beam 2 may be spatially covered by the transmitting beam 1, and receiving beams in other slots cannot be spatially covered by the transmitting beam 1. Therefore, at the moment of measuring the CR, a ratio of the number of used subchannels only in three slots n-N-1, n-N-3 and n-N-4 within the CR window to the total number of subchannels in the three slots is calculated as the measured CR value, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The transmitting beam 1 and the transmitting beam 2 may be spatially covered by the transmitting beam 1, and receiving beams in other slots cannot be spatially covered by the transmitting beam 1. Therefore, at the moment of measuring the CR, a ratio of the number of used subchannels only in three slots n-N-1, n-N-3 and n-N-4 within the CR window to the total number of subchannels in all slots within the CR measurement window is calculated as the measured CR value, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The transmitting beam 1 and the transmitting beam 2 may be spatially covered by the transmitting beam 1, and receiving beams in other slots cannot be spatially covered by the transmitting beam 1. Therefore, at the moment of measuring the CR, within the CR window, a ratio of the number of used subchannels only in three slots n-N-1, n-N-3 and n-N-4 to the total number of subchannels in the three slots is calculated according to each priority as a measured CR value under each priority, which is used to calculate the transmission parameter for the data to be transmitted in slot n.

Referring to FIG. 17, the data to be transmitted in slot n uses the transmitting beam 1, and within the CR measurement window [n-N-a, n-N+b], the transmitting beam 1 is used in slot n-N-4, the transmitting beam 2 is used in slot n-N-3, and the transmitting beam 1 is used in slot n-N-1. The transmitting beam 1 and the transmitting beam 2 may be spatially covered by the transmitting beam 1, and receiving beams in other slots cannot be spatially covered by the transmitting beam 1. Therefore, at the moment of measuring the CR, within the CR window, a ratio of the number of used subchannels only in three slots n-N-1, n-N-3 and n-N-4 to the total number of subchannels in all slots within the CR measurement window is calculated according to each priority as a measured CR value under each priority, which is used to calculate the transmission parameter for the data to be transmitted in slot n.

In an exemplary implementation, the data to be transmitted in slot n uses the first transmitting beam, and within the CR measurement window [n-N-a, n-N+b], the CR is counted based on the second transmitting beam. The UE in the CR measurement window may use various beams to transmit data, and the second transmitting beam refers to any transmitting beam within the CR measurement window. Counting the CR based on the second transmitting beam refers to, within the CR measurement window, a ratio of the number of subchannels that have used the second transmitting beam and the number of subchannels that are about to use the second transmitting beam to the total number of subchannels in the measurement window.

Referring to FIG. 17, the data to be transmitted in slot n uses the first transmitting beam, and within the CR measurement window [n-N-a, n-N+b], the CR is counted based on the second transmitting beam. The UE in the CR measurement window may use various beams to transmit data, and the second transmitting beam refers to any transmitting beam within the CR measurement window. Counting the CR based on the second transmitting beam refers to, within the CR measurement window, a ratio of the number of subchannels that have used the second transmitting beam and the number of subchannels that are about to use the second transmitting beam to the total number of subchannels in the measurement window.

In an exemplary implementation, the data to be transmitted in slot n uses the first transmitting beam, and within the CR measurement window [n-N-a, n-N+b], the CR is counted based on the second transmitting beam. The UE in the CR measurement window may use various beams to transmit data, the second transmitting beam refers to all transmitting beams greater than the first transmitting beam in spatial beam width within the CR measurement window, or the first receiving beam refers to all transmitting beams with spatial beam widths greater than a first threshold within the measurement window. Counting the CR based on the second transmitting beam refers to, within the CR measurement window, a ratio of the number of subchannels that have used the second transmitting beam and the number of subchannels that are about to use the second transmitting beam to the total number of subchannels in the measurement window.

In an exemplary implementation, a CBR value measured on a resource pool associated with each candidate carrier wave is measured, and it may also be appreciated that, a manner of measuring the CBR value may be one or more of the above embodiments, and one or more carrier waves for the data to be transmitted may be determined based on the measured value.

In an exemplary implementation, first UE has data to be transmitted in slot n and uses a first transmitting beam, and second UE measures a CBR based on a first receiving beam in slot m.

The first receiving beam includes at least one of the following:
a corresponding receiving beam at the time when the second UE receives data from the first transmitting beam of the first UE; a beam indicated to the second UE by the first UE; all receiving beams that may spatially cover the corresponding receiving beam at the time when the second UE receives the data from the first transmitting beam of the first UE; a receiving beam with a certain beam width of the second UE; or any receiving beam of the second UE.

The first receiving beam is all receiving beams spatially overlapping with the corresponding receiving beam at the time when the second UE receives the data from the first transmitting beam of the first UE. The first receiving beam is all receiving beams spatially overlapping with the first transmitting beam of the first UE. The second UE sends a measurement result to the first UE, and the first UE determines a transmission parameter for data to be transmitted in slot n of the first UE according to a CBR measured by it, the CBR fed back by the second UE, together with a CR measured by it.

The second UE is target receiving UE for the data of the first UE, or the second UE is UE indicated by the first UE.

FIG. 18 is a schematic structural diagram of a parameter determination apparatus provided by an embodiment of the present application. The apparatus may perform the parameter determination method provided by any embodiment of the present application, and has corresponding functional modules for performing the method and beneficial effects. The apparatus may be implemented by software and/or hardware. As shown in FIG. 18, the apparatus provided by the embodiment of the present application specifically includes:
a parameter determination module 101, configured to determine a transmission parameter for data to be transmitted that uses a first transmitting beam at a first moment based on a measured value measured in a resource pool. The measured value includes at least one of the following:
a measured channel busy ratio value based on a first receiving beam on a resource pool within a channel busy ratio measurement window determined at the first moment, or a measured channel occupancy ratio value based on the first transmitting beam or a second transmitting beam on a resource pool within a channel occupancy ratio measurement window determined at the first moment.

Further, based on the above embodiment of the present application, the transmission parameter includes at least one of the following:
an encoding policy, a number of retransmissions, a number of subchannels, transmitting power, or a carrier wave.

Further, based on the above embodiment of the present application, the first receiving beam includes at least one of the following:
a receiving beam having a beam correspondence relationship with the first transmitting beam on the resource pool within the channel busy ratio measurement window, wherein the correspondence relationship is determined by a device-indicated beam correspondence capability; a receiving beam spatially covering the first transmitting beam on the resource pool within the channel busy ratio measurement window; a receiving beam spatially covered by the first transmitting beam on the resource pool within the channel busy ratio measurement window; a receiving beam spatially overlapping with the first transmitting beam on the resource pool within the channel busy ratio measurement window; all receiving beams on the resource pool within the channel busy ratio measurement window; all receiving beams greater than the first transmitting beam in spatial beam width on the resource pool within the channel busy ratio measurement window; or all receiving beams with spatial beam widths greater than a first threshold on the resource pool within the channel busy ratio measurement window.

A receiving beam with a received signal strength indication measured on a subchannel greater than a second threshold on the resource pool within the channel busy ratio measurement window.

Further, based on the above embodiment of the present application, the first receiving beam includes at least one of the following: all transmitting beams spatially covering the first transmitting beam on the resource pool in the channel occupancy ratio measurement window; all transmitting beams spatially covered by the first transmitting beam on the resource pool within the channel occupancy ratio measurement window; a transmitting beam spatially overlapping with the first transmitting beam on the resource pool within the channel occupancy ratio measurement window; all transmitting beams on the resource pool within the channel occupancy ratio measurement window; all transmitting beams greater than the first transmitting beam in spatial beam width on the resource pool within the channel occupancy ratio measurement window; or all transmitting beams with spatial beam widths greater than a third threshold on the resource pool within the channel occupancy ratio measurement window.

Further, based on the above embodiment of the present application, the apparatus further includes: a channel busy ratio module, configured to measure a received signal strength indication on a subchannel on the resource pool within the channel busy ratio measurement window in a slot where the first receiving beam is located; and determine a ratio of a number of subchannels with the received signal strength indications exceeding a threshold to a total number of subchannels in the slot where the first receiving beam on the resource pool is located as the channel busy ratio value.

Further, based on the above embodiment of the present application, the apparatus further includes: the channel busy ratio module, further configured to measure a received signal strength indication on a subchannel on the resource pool within the channel busy ratio measurement window in a slot where the first receiving beam is located; and determine a ratio of a number of subchannels with the received signal strength indications exceeding a threshold to a total number of subchannels in all slots in which the received signal strength indications are measured on the resource pool within the channel busy ratio measurement window as the channel busy ratio value.

Further, based on the above embodiment of the present application, the apparatus further includes: a channel occupancy ratio module, configured to determine, on the resource pool within the channel occupancy ratio measurement window, a ratio of a number of subchannels used by the first transmitting beam in a corresponding slot to a total number of subchannels in the corresponding slot of the first transmitting beam on the resource pool as the channel occupancy ratio value; or determine, on the resource pool within the channel occupancy ratio measurement window, a ratio of a number of subchannels used by the second transmitting beam in a corresponding slot to a total number of subchannels in the corresponding slot of the second transmitting beam on the resource pool as the channel occupancy ratio value.

Further, based on the above embodiment of the present application, the apparatus further includes: the channel occupancy ratio module, configured to determine, on the resource pool within the channel occupancy ratio measurement window, a ratio of a number of subchannels used by the first transmitting beam in a corresponding slot to a total number of subchannels in all slots on the resource pool within the channel occupancy ratio measurement window as the channel occupancy ratio value; or determine, on the resource pool within the channel occupancy ratio measurement window, a ratio of a number of subchannels used by the second transmitting beam in a corresponding slot to a total number of subchannels in all slots on the resource pool within the channel occupancy ratio measurement window as the channel occupancy ratio value.

Further, based on the above embodiment of the present application, the apparatus further includes: the channel occupancy ratio module, configured to determine, on the resource pool within the channel occupancy ratio measurement window, a ratio of a number of subchannels used by the first transmitting beam in a corresponding slot under each priority to a total number of subchannels in the corresponding slot of the first transmitting beam on the resource pool as the channel occupancy ratio value corresponding to the priority; or determine, on the resource pool within the channel occupancy ratio measurement window, a ratio of a number of subchannels used by the second transmitting beam in a corresponding slot under each priority to a total number of subchannels in the corresponding slot of the second transmitting beam on the resource pool as the channel occupancy ratio value corresponding to the priority.

Further, based on the above embodiment of the present application, the apparatus further includes: the channel occupancy ratio module, configured to determine, on the resource pool within the channel occupancy ratio measurement window, a ratio of a number of subchannels used by the first transmitting beam in a corresponding slot under each priority to a total number of subchannels in all slots on the resource pool within the channel occupancy ratio measurement window as the channel occupancy ratio value corresponding to the priority; or determine, on the resource pool within the channel occupancy ratio measurement window, a ratio of a number of subchannels used by the second transmitting beam in a corresponding slot under each priority to a total number of subchannels in all slots on the resource pool within the channel occupancy ratio measurement window as the channel occupancy ratio value corresponding to the priority.

Further, based on the above embodiment of the present application, the apparatus further includes: a carrier wave determining module, configured to determine, based on the measured value measured on at least one resource pool associated with each carrier wave in all candidate carrier waves, at least one carrier wave for the data to be transmitted that uses the first transmitting beam at the first moment.

Further, based on the above embodiment of the present application, the channel busy ratio module is further configured to use a default or configured or pre-configured measured channel occupancy ratio value in a case where the measured channel occupancy ratio value on the resource pool within the channel busy ratio measurement window is lower than a fourth threshold.

FIG. 19 is a schematic structural diagram of an electronic device provided by an embodiment of the present application. The electronic device includes a processor 10, a memory 11, an input apparatus 12 and an output apparatus 13. There may be one or more processors 10 in the electronic device, and in FIG. 19, one processor 10 is taken as an example. The processor 10, the memory 11, the input apparatus 12 and the output apparatus 13 in the electronic device may be connected by a bus or other manners, and in FIG. 19, connection by a bus is taken as an example.

As a computer-readable storage medium, the memory 11 may be configured to store software programs, computer-executable programs and modules, such as a module (a parameter determination module 101) corresponding to the apparatus in the embodiment of the present application. By running the software programs, instructions and modules stored in the memory 11, the processor 10 executes various functional applications and data processing of the electronic device, namely implementing the above method.

The memory 11 may mainly include a program storage area and a data storage area, wherein the program storage area may store an operating system and an application required for at least one function; and the data storage area may store data created according to use of the electronic device. In addition, the memory 11 may include a high random access memory, and may also include a non-volatile memory, such as at least one disk storage device, a flash memory device, or other non-volatile solid-state storage devices. In some instances, the memory 11 may further include a memory which is remotely disposed relative to the processor 10, and the remote memory may be connected to the electronic device through a network. Instances of the above network include but are not limited to the Internet, the Intranet, a local area network, a mobile communication network and a combination thereof.

The input apparatus 12 may be configured to receive input digital or character information and generate key signal input related to user settings and function control of the electronic device. The output apparatus 13 may include a display device such as a display screen.

An embodiment of the present application further provides a storage medium including computer-executable instructions. The computer-executable instructions, when executed by a computer processor, are used to perform a parameter determination method. The method includes: determining a transmission parameter for data to be transmitted that uses a first transmitting beam at a first moment based on a measured value measured in a resource pool. The measured value includes at least one of the following: a measured channel busy ratio value based on a first receiving beam on a resource pool within a channel busy ratio measurement window determined at the first moment, or a measured channel occupancy ratio value based on the first transmitting beam or a second transmitting beam on a resource pool within a channel occupancy ratio measurement window determined at the first moment.

Through the above descriptions about the implementations, those skilled in the art can clearly understand that the present application may be implemented by the aid of software and necessary general hardware. Of course, the present application may also be implemented through hardware, but in many cases, the former is the better implementation. Based on such understandings, the technical solution of the present application may be embodied in the form of a software product essentially or on the part of contributions to the prior art. The computer software product may be stored in a computer-readable storage medium, such as a computer floppy disk, a read-only memory (ROM), a random access memory (RAM), a flash, a hard disk or an optical disk. The computer software product includes a plurality of instructions used to enable a computer device (a personal computer, a server or a network device, etc.) to perform the methods described in various embodiments of the present application.

It is worth noting that various units and modules included in the embodiment of the above apparatus are only divided according to functional logic, but are not limited to the above division, as long as the corresponding functions can be achieved; and in addition, the specific names of the functional units are only for the purpose of distinguishing them from each other and are not used to limit the scope of protection of the present application.

Those of ordinary skill in the art can understand that all or some of steps, apparatuses, and functional modules/units in devices in the method disclosed above may be implemented as software, firmware, hardware, and appropriate combinations thereof.

In hardware implementations, the division between the functional modules/units mentioned in the above descriptions does not necessarily correspond to the division of physical components. For example, a physical component may have multiple functions, or a function or step may be executed collaboratively by several physical components. Some or all physical components may be implemented as software executed by a processor, such as a central processor, a digital signal processor, or a micro-processor, or implemented as hardware, or implemented as an integrated circuit, such as an application-specific integrated circuit. Corresponding software may be distributed on a computer-readable medium, which may include a computer storage medium (or non-temporary medium) and a communication medium (or temporary medium). As is well known to those of ordinary skill in the art, the term "computer storage medium" includes volatile and non-volatile, and removable and non-removable media implemented in any method or technology for storing information, such as computer-readable instructions, data structures, program modules, or other data. The computer storage medium includes, but is not limited to, a RAM, a ROM, an EEPROM, a flash memory or other memory techniques, a CD-ROM, a digital versatile disc (DVD) or other optical disk storage, a magnetic cassette, a magnetic tape, magnetic disk storage or other magnetic storage apparatuses, or any other media that can be used to store desired information and can be accessed by a computer. In addition, it is well known to those of ordinary skill in the art that a communication medium typically includes computer-readable instructions, data structures, program modules, or other data in modulated data signals such as carriers or other transmission mechanisms, and may include any information delivery medium.

The above content describes the preferred embodiments of the present application with reference to the accompanying drawings, and does not limit the scope of the rights of the present application. Any modifications, equivalent substitutions, and improvements made by a person skilled in the art without departing from the scope and essence of the present application shall be within the scope of the rights of the present application.

## Claims

1. A parameter determination method, comprising:
determining a transmission parameter for data to be transmitted that uses a first transmitting beam at a first moment based on a measured value measured in a resource pool;
wherein the measured value comprises at least one of the following:
a measured channel busy ratio value based on a first receiving beam on a resource pool within a channel busy ratio measurement window determined at the first moment, or
a measured channel occupancy ratio value based on the first transmitting beam or a second transmitting beam on a resource pool within a channel occupancy ratio measurement window determined at the first moment.

2. The method according to claim 1, wherein the transmission parameter comprises at least one of the following:
an encoding policy, a number of retransmissions, a number of subchannels, transmitting power, or a carrier wave.

3. The method according to claim 1, wherein the first receiving beam comprises at least one of the following:
a receiving beam having a beam correspondence relationship with the first transmitting beam on the resource pool within the channel busy ratio measurement window, wherein the correspondence relationship is determined by a device-indicated beam correspondence capability;
a receiving beam spatially covering the first transmitting beam on the resource pool within the channel busy ratio measurement window;
a receiving beam spatially covered by the first transmitting beam on the resource pool within the channel busy ratio measurement window;
a receiving beam spatially overlapping with the first transmitting beam on the resource pool within the channel busy ratio measurement window;
all receiving beams on the resource pool within the channel busy ratio measurement window;
all receiving beams greater than the first transmitting beam in spatial beam width on the resource pool within the channel busy ratio measurement window;
all receiving beams with spatial beam widths greater than a first threshold on the resource pool within the channel busy ratio measurement window; or
a receiving beam with a received signal strength indication measured on a subchannel greater than a second threshold on the resource pool within the channel busy ratio measurement window.

4. The method according to claim 1, wherein the second transmitting beam comprises at least one of the following:
all transmitting beams spatially covering the first transmitting beam on the resource pool in the channel occupancy ratio measurement window;
all transmitting beams spatially covered by the first transmitting beam on the resource pool within the channel occupancy ratio measurement window;
a transmitting beam spatially overlapping with the first transmitting beam on the resource pool within the channel occupancy ratio measurement window;
all transmitting beams on the resource pool within the channel occupancy ratio measurement window;
all transmitting beams greater than the first transmitting beam in spatial beam width on the resource pool within the channel occupancy ratio measurement window; or
all transmitting beams with spatial beam widths greater than a third threshold on the resource pool within the channel occupancy ratio measurement window.

5. The method according to claim 1, wherein determining the measured channel busy ratio value based on the first receiving beam on the resource pool within the channel busy ratio measurement window determined at the first moment comprises:
measuring a received signal strength indication on a subchannel on the resource pool within the channel busy ratio measurement window in a slot where the first receiving beam is located; and
determining a ratio of a number of subchannels with the received signal strength indications exceeding a threshold to a total number of subchannels in the slot where the first receiving beam on the resource pool is located as the channel busy ratio value.

6. The method according to claim 1, wherein determining the measured channel busy ratio value based on the first receiving beam on the resource pool within the channel busy ratio measurement window determined at the first moment comprises:
measuring a received signal strength indication on a subchannel on the resource pool within the channel busy ratio measurement window in a slot where the first receiving beam is located; and
determining a ratio of a number of subchannels with the received signal strength indications exceeding a threshold to a total number of subchannels in all slots in which the received signal strength indications are measured on the resource pool within the channel busy ratio measurement window as the channel busy ratio value.

7. The method according to claim 1, wherein determining the measured channel occupancy ratio value based on the first transmitting beam or the second transmitting beam on the resource pool within the channel occupancy ratio measurement window determined at the first moment comprises:
determining, on the resource pool within the channel occupancy ratio measurement window, a ratio of a number of subchannels used by the first transmitting beam in a corresponding slot to a total number of subchannels in the corresponding slot of the first transmitting beam on the resource pool as the channel occupancy ratio value; or
determining, on the resource pool within the channel occupancy ratio measurement window, a ratio of a number of subchannels used by the second transmitting beam in a corresponding slot to a total number of subchannels in the corresponding slot of the second transmitting beam on the resource pool as the channel occupancy ratio value.

8. The method according to claim 1, wherein determining the measured channel occupancy ratio value based on the first transmitting beam or the second transmitting beam on the resource pool within the channel occupancy ratio measurement window determined at the first moment comprises:
determining, on the resource pool within the channel occupancy ratio measurement window, a ratio of a number of subchannels used by the first transmitting beam in a corresponding slot to a total number of subchannels in all slots on the resource pool within the channel occupancy ratio measurement window as the channel occupancy ratio value; or
determining, on the resource pool within the channel occupancy ratio measurement window, a ratio of a number of subchannels used by the second transmitting beam in a corresponding slot to a total number of subchannels in all slots on the resource pool within the channel occupancy ratio measurement window as the channel occupancy ratio value.

9. The method according to claim 1, wherein determining the measured channel occupancy ratio value based on the first transmitting beam or the second transmitting beam on the resource pool within the channel occupancy ratio measurement window determined at the first moment comprises:
determining, on the resource pool within the channel occupancy ratio measurement window, a ratio of a number of subchannels used by the first transmitting beam in a corresponding slot under each priority to a total number of subchannels in the corresponding slot of the first transmitting beam on the resource pool as the channel occupancy ratio value corresponding to the priority; or
determining, on the resource pool within the channel occupancy ratio measurement window, a ratio of a number of subchannels used by the second transmitting beam in a corresponding slot under each priority to a total number of subchannels in the corresponding slot of the second transmitting beam on the resource pool as the channel occupancy ratio value corresponding to the priority.

10. The method according to claim 1, wherein determining the measured channel occupancy ratio value based on the first transmitting beam or the second transmitting beam on the resource pool within the channel occupancy ratio measurement window determined at the first moment comprises:
determining, on the resource pool within the channel occupancy ratio measurement window, a ratio of a number of subchannels used by the first transmitting beam in a corresponding slot under each priority to a total number of subchannels in all slots on the resource pool within the channel occupancy ratio measurement window as the channel occupancy ratio value corresponding to the priority; or
determining, on the resource pool within the channel occupancy ratio measurement window, a ratio of a number of subchannels used by the second transmitting beam in a corresponding slot under each priority to a total number of subchannels in all slots on the resource pool within the channel occupancy ratio measurement window as the channel occupancy ratio value corresponding to the priority.

11. The method according to claim 1, wherein determining the transmission parameter for the data to be transmitted that uses the first transmitting beam at the first moment based on the measured value measured in the resource pool comprises: determining, according to the measured value measured on at least one resource pool associated with each carrier wave in all candidate carrier waves, at least one carrier wave for the data to be transmitted that uses the first transmitting beam at the first moment based on the measured value.

12. The method according to claim 5 or 6, further comprising:
using a default or configured or pre-configured measured channel occupancy ratio value in a case where the measured channel occupancy ratio value on the resource pool within the channel busy ratio measurement window is lower than a fourth threshold.

13. The method according to any one of claims 5 to 11, wherein the subchannel comprises at least one of the following: a subchannel in the resource pool, a data channel in the resource pool, a control channel in the resource pool, and a reference signal resource in the resource pool.

14. An electronic device, comprising:
one or more processors; and
a memory, configured to store one or more programs;
wherein the one or more programs, when executed by the one or more processors, cause the one or more processors to implement the parameter determination method according to any one of claims 1 to 13.

15. A computer-readable storage medium, wherein the computer-readable storage medium stores one or more programs, and the one or more programs, when executed by one or more processors, implement the parameter determination method according to any one of claims 1 to 13.
